# EUROPÄISCHE PATENTSCHRIFT

(11) **EP 1 465 959 B1**
(45) Veröffentlichungstag und Bekanntmachung des Hinweises auf die Patenterteilung: **06.09.2006**
(21) Anmeldenummer: 03701490.9
(22) Anmeldetag: 07.01.2003
(51) Int. Cl.: C09J 5/06, C08J 5/12

(54) **THERMISCHE AKTIVIERUNG VON FOLIEN**
THERMAL ACTIVATION OF FILMS
ACTIVATION THERMIQUE DE FILMS

(30) Priorität: 14.01.2002 DE 10201190
(43) Veröffentlichungstag der Anmeldung: 13.10.2004
(73) Patentinhaber: Henkel Kommanditgesellschaft auf Aktien, 40589 Düsseldorf (DE)
(72) Erfinder: KREBS, Michael, D-40724 Hilden (DE); FRANKEN, Uwe, D-41542 Dormagen (DE); HOFFMANN, Horst, D-73467 Kirchheim (DE)
(86) Internationale Anmeldenummer: PCT/EP2003/000069
(87) Internationale Veröffentlichungsnummer: WO 2003/040249

(56) Entgegenhaltungen:
- EP-A- 0 565 752
- EP-A- 0 581 564

## Beschreibung

Die Erfindung betrifft ein Verfahren zum Kaschieren von ein- oder mehrschichtigen Oberflächenfolien auf der Basis von Polymeren mit einer Glasübergangstemperatur oberhalb von 50 °C auf Formkörper aus Polyvinylchlorid (PVC), Polypropylen, Acrylnitril-Butadien-Styrolcopolymeren (ABS), Holz oder Aluminium sowie die Verwendung derartig kaschierter Formkörper.

Auf die Oberfläche von Gegenständen, wie z.B. Fensterprofilen, Türen, Gestellen, Möbeln, Gehäusen aus Kunststoff, Holz, Holzwerkstoffen, Metallen oder ähnlichen Werkstoffen wird häufig eine eingefärbte oder gemusterte Oberflächenfolie aufgebracht, um auf diese Weise zum einen die Oberfläche der Gegenstände gegen schädliche Einflüsse, wie z.B. Korrosion, Verfärbung durch Licht oder mechanische Einwirkung zu schützen. Ein anderer Grund für das Aufbringen der Oberflächenfolie kann es sein, die Oberfläche des Gegenstandes ansprechender zu gestalten.

Beispielsweise kann bei Verwendung einer entsprechenden gemusterten Folie der Eindruck wertvollen Holzes erzeugt werden, auch wenn tatsächlich ein Werkstoff verwendet wird, der auf Grund seiner optischen Beschaffenheit, Struktur, Oberfläche oder Farbe nicht für diese Anwendung geeignet wäre. So soll eine derartig aufgebrachte Oberflächenfolie die Oberfläche des Gegenstandes vor Umwelteinflüssen wie z.B. Einwirkungen von Wasser, Feuchtigkeit, Temperaturwechseln oder Licht, insbesondere Sonnenlicht oder auch in der Luft enthaltenden Umweltschadstoffen schützen.

Im Fenster- und Türenbau haben Kunststoff-Profile, insbesondere Profile aus thermoplastischen Werkstoffen wie Polyvinylchlorid (PVC), Polypropylen (PP), Acrylnitril-Butadien-Styrol-Copolymere (ABS) wegen ihrer leichten Herstellbarkeit nach dem Extrusions-Verfahren, ihren niedrigen Kosten und ihren guten Gebrauchseigenschaften eine weite Verbreitung gefunden, sei es als Voll-, Hohl- oder Kernprofile. Im Falle von PVC kann dabei das zu verwendende PVC sowohl Weich- als

auch Halbfest- oder insbesondere Hart-PVC sein. Als Oberflächenfolien werden entweder PVC-Folien, CPL- (Continuous Pressure Laminates) und HPL- (High Pressure Laminates) Folien, (bedrucktes) Papier, Furnier oder andere Flächengebilde verwendet, die in der Regel eine Dicke von 0,1 bis 1,0 mm haben. Für den Bereich der Außenanwendungen werden zur Kaschierung zunehmend besonders witterungsbeständige und lichtbeständige neuere Folien vorgeschlagen. Insbesondere sind dies Folien auf Basis von (Meth)acrylaten, insbesondere Mischungen von verschiedenen Poly(meth)acrylathomo- und Copolymeren. Ein Vorteil der Verwendung von Poly-(meth)acrylat-Folien besteht darin, daß sich leicht Folien verschiedener Härten (von sprödhart bis zu hoher Flexibilität) durch geeignete Wahl der Co-Monomeren herstellen lassen. Ein weiterer Vorteil ist darin zu sehen, daß zur Pigmentierung derartiger Folien normale, hoch lichtechte organische Pigmente oder auch eisen-, chrom- oder nickelhaltige Pigmente verwendet werden können.

Die gute Wetter- und UV-Beständigkeit derartiger Poly(meth)acrylat- Folien ist bekannt. In neuerer Zeit wurden zur weiteren Verbesserung der Licht- und Witterungsstabilität als Mehrschichtfolien ausgebildete Oberflächenfolien vorgeschlagen. So schlägt die EP-A-343491 Mehrschichtfolien aus einer (Meth)acrylatgrundfolie mit einer glasklaren Polyacrylatdeckfolie und einer weiteren glasklaren Schutzfolie aus Polyvinylidenfuorid (PVDF) oder Polyvinylfluorid (PVF) vor.

Derartige ein- oder mehrschichtige Oberflächenfolien auf der Basis von Acrylaten oder Methacrylaten weisen zwar ausgezeichnete Licht- und Witterungsbeständigkeit auf, eine dauerhafte wetterbeständige Verklebung dieser Folien mit den vorgenannten Werkstoffen aus thermoplastischen Polymeren, Holz, Aluminium und dergleichen war jedoch insbesondere auch deshalb schwer durchzuführen, weil diese Folien auf der Basis von (Meth)acrylaten eine hohe Steifigkeit aufweisen und beim Abkühlen des Klebeverbundes durch hohe Rückstellkräfte unmittelbar nach der Verklebung die Klebefuge sehr stark auf Zug belasten. Für effiziente Fertigungsprozesse werden eine hohe Anfangshaftfestigkeit der Verklebung nach sehr kurzer Zeit bei einer noch größeren Endfestigkeit und Alterungsbeständigkeit der Verklebung gefordert.

Diese Erfordernisse werden für die biegesteifen (Meth)acrylatfolien mit herkömmlichen Fügeverfahren durch viele Schmelzklebstoffe nur in unzureichender Weise erfüllt.

Gemäß der EP 0581 564 ist ein Verfahren bekannt bei dem ein Acrylatformkörper auf eine Temperatur zwischen 50 und 100°C für mindestens zwei Stunden aufgeheizt wird, danach ein Schmelzklebstofffilm auf die Oberfläche des Acrylatformkörpers oder die der Dekorfolie oder auf beiden Oberflächen aufgetragen wird. Danach werden Acrylatformkörper und Dekorfolie unter Druck in Kontakt gebracht, wobei mindestens eine der Oberflächen auf eine Temperatur oberhalb des Erweichungspunktes des Klebstoffs jedoch unterhalb des Erweichungspunktes des Acrylatformkörpers oder der Dekorfolie gebracht wird. Anschließend soll das Laminat noch für eine Zeit von mindestens einer Stunde bei Temperaturen von 30 bis 60°C vorzugsweise 40 bis 50°C gelagert und getempert werden. Als Schmelzklebstoffe werden dort nicht reaktive Acrylat- oder Polyesterbasierte Schmelzklebstoffe erwähnt.

Angesichts dieses Standes der Technik haben sich die Erfinder die Aufgabe gestellt, ein Verfahren zum Kaschieren bereitzustellen, das insbesondere die Verklebung von ein- oder mehrschichtigen Oberflächenfolien auf der Basis von Polymeren mit einer Glasübergangstemperatur oberhalb von 50 °C verbessert. Die erfindungsgemäße Lösung der Aufgabe ist den Ansprüchen zu entnehmen.

Sie besteht im Wesentlichen in der Bereitstellung eines Verfahrens zum Kaschieren von ein- oder mehrschichtigen Folien auf der Basis von Polymeren mit einer Glasübergangstemperatur oberhalb von 50 °C auf Formkörper aus thermoplastischen Polymeren, Holz, Holzwerkstoffen, Metallen, das die folgenden wesentlichen Fertigungsschritte beinhaltet:
- thermische Aktivierung der Folie durch Erwärmung mit elektromagnetischer Strahlung,
- Auftrag des Klebstoffes auf die Folienoberfläche,
- Fügen der Folie auf den Formkörper, ggf. unter Anpressen der Folie auf den Formkörper.

Es kann zweckmäßig sein, daß vor der thermischen Aktivierung der Folie noch eine Vorbehandlung der Folie mit einem Reiniger erfolgt, ggf. kann die Folie anschließend durch eine Coronabehandlung weiter vorbehandelt werden, oder die Coronabehandlung tritt an die Stelle des vorgenannten Reinigungsschrittes. Weiterhin kann sich noch ein Auftrag eines Primers (Haftvermittlers) auf die Folienoberfläche anschließen. Ggf. kann bei Verwendung eines Primers auf den Reiniger und / oder auf die Coronavorbehandlung der Folie verzichtet werden. Auch die Formkörperoberfläche muß ggf. vor dem Fügen der Folie auf den Formkörper Vorbehandlungen unterworfen werden. Diese Vorbehandlungen können in ähnlicher Weise wie oben geschildert, ein Primerauftrag sein, eine Behandlung mit einem Reiniger, ggf. gefolgt vom Ablüften der flüchtigen Bestandteile, wobei letzteres durch Zufuhr von Wärme beschleunigt werden kann. Es kann auch notwendig sein, daß anstelle der vorgenannten Vorbehandlungen, oder zusammen mit diesen, die Formkörperoberfläche durch Coronabehandlung oder durch Beflammung aktiviert wird. Dabei richten sich die Vorbehandlungsmaßnahmen der Formkörperoberfläche nach den Werkstoffen, aus denen der Formkörper aufgebaut ist.

Weit verbreitete Formkörper bestehen aus Polyvinylchlorid, Polypropylen, Acrylnitril-Butadien-Styrol-Copolymeren (ABS), Holz, Holzwerkstoffen oder Aluminium. Unter Holzwerkstoffen sind Werkstoffe zu verstehen, die vorwiegend aus Holz oder Holz-basierten Rohstoffen aufgebaut sind, hierzu zählen Beispielsweise Schichtholz, Sperrholz, Furnierplatten, Stäbchen-, Stab-, Streifen- und Tischlerplatten, Holzfaserplatten, Holzspanplatten und Preßvollholz.
Dabei benötigen insbesondere Formkörperoberflächen aus thermoplastischen. Kunststoffen häufig eine Oberflächenvorbehandlung, da deren Oberflächen häufig haftungsfeindliche Bestandteile aus den Formgebungsverfahren aufweisen.

Eine haftfördernde Oberflächenvorbehandlung der Formkörperoberflächen bzw. der Oberflächenfolien kann mit Hilfe des in der WO 99/46358 beschriebenen Reinigungsmittels erfolgen. Dabei können die gereinigten Kunststoffoberflächen vor dem Verkleben noch einer weiteren mechanischen, physikalischen, chemischen oder elektrochemischen Vorbehandlung unterworfen werden. Dies kann insbesondere ein Auftrag eines Haftvermittlers oder Primers, z.B. der vorgenannten Art, sein oder es kann eine Vorbehandlung durch Beflammung oder durch eine Corona - Behandlung vorgenommen werden.

Eine Corona - Behandlung von zu verklebenden Kunststoffoberflächen ist allgemein bekannt, so schlägt die EP 0 761 415 A2 (Fa. Agrodyn Hochspannungstechnik GmbH) vor, die Oberfläche mit einem gebündelten Plasmastrahl zu überstreichen. Hier wird insbesondere auf die Vorbehandlung von Kunststoffolien Bezug genommen. Als zu behandelnde Oberflächen werden Kunststoffe allgemein genannt, stark fluorierte Polymere, z. B. PTFE, und Metalloberflächen, z. B. Aluminium.

Der genannte Plasmastrahl wird erzeugt, in dem man ein Arbeitsgas, insbesondere Luft, unter Normaldruck und unter Normaltemperatur durch einen elektrischen Lichtbogen bläst. Beim Austritt des Arbeitsgases aus dem Lichtbogen erhält man dann den sogenannten Plasmastrahl. Ob es sich hier tatsächlich um ein Plasma im eigentlichen Sinne, nämlich um ein zumindest teilweise in lonen und Elektronen aufgespaltenes Gas handelt, ist dabei nicht sicher. Wesentlich dabei ist aber, daß dieser Strahl zur Vorbehandlung von Kunststoffoberflächen geeignet ist.

Anstelle des genannten gebündelten Plasmastrahles, der eine im Wesentlichen punktförmige Vorbehandlung der Oberfläche ermöglicht, kann auch eine Vielzahl von in einem Kreis angeordneten Plasmastrahlen verwendet werden, die um den Kreismittelpunkt rotieren (DE 298 05 999 U1). Auf diese Weise erhält man einen ringförmigen Plasmastrahl, mit welchem man eine relativ große Oberfläche schnell überstreichen und damit vorbehandeln kann.

Als haftvermittelnde Voranstriche können an sich bekannte lösungsmittelhaltige Primer, vorzugsweise jedoch wäßrige Primer, verwendet werden, wie sie beispielsweise in der DE-A-19826329 offenbart sind.

Für die vorgenannten Oberflächenfolie auf Basis von (Meth)acrylatgrundfolien und ähnlichen biegesteifen Folien mit Glasübergangstemperaturen der zugrunde liegenden Polymeren bzw. Copolymeren zwischen 50 °C und 130 °C, insbesondere zwischen 60 °C und 100 °C, werden jedoch bessere und schnellere Verklebungsergebnisse erzielt, wenn die Oberflächenfolie mit Hilfe von elektromagnetischer Strahlung thermisch aktiviert wird.
Als elektromagnetische Strahlung eignet sich im Prinzip jede nicht ionisierende elektromagnetische Strahlung, vorzugsweise kann hierzu IR-Strahlung verwendet werden, insbesondere die Strahlung des nahen Infrarots (NIR) im Wellenlängenbereich zwischen 0,7 und 1,5 µm. Dabei sollten die Strahler in bevorzugten Ausführungsformen rasch an die Aktivierungserfordernisse durch weitgehend trägheitslose Steuerung anpaßbar sein. Geeignete Strahler werden beispielsweise durch die Firmen Micor GmbH, Advanced Photonics Technologies AG (Adphos) oder Lambda Technology angeboten. Wichtig bei der effizienten Verwendung der NIR-Strahlung ist, daß die Folie gezielt mit hoher Energiedichte thermisch aktiviert wird.

Eine weitere Möglichkeit der thermischen Aktivierung kann durch elektromagnetische Strahlung im Radiofrequenzbereich (30 bis 100 MHz) oder im Bereich der Mikrowellenstrahlung (400 MHz bis 3 GHz) erfolgen.

Um die thermische Aktivierung durch Radiofrequenz-Strahlung oder Mikrowellen-Strahlung der Oberflächenfolie besonders effizient zu gestalten, kann es notwendig sein, daß entweder in die Folie oder in eine eventuelle aufzubringende Primerschicht hocheffiziente Absorber für die elektromagnetische Strahlung eingebracht werden. Besonders gut eignen sich hierfür nanoscalige Teilchen mit ferromagnetischen, ferrimagnetischen, superparamagnetischen oder piezoelektrischen Eigenschaften, da sich bei deren Anwesenheit in der Folienschicht oder in der Primerschicht die Folie bei Einwirkung selbst geringer Strahlungsleistung so stark erwärmt wird, daß die Oberfläche für eine Verklebung besonders gut geeignet ist. Besonders geeignete nanoscalige Absorber werden beispielsweise in der noch unveröffentlichten PCT-EP 01/08600 auf Seite 7 bis Seite 9 offenbart.

Eine weitere Möglichkeit der thermischen Aktivierung der Oberflächenfolie kann durch nachträglichen Eintrag, d.h. nach dem Fügen bzw. Kaschieren der Oberflächenfolie auf den Formkörper erfolgen. Bei einer derartigen Vorgehensweise können alle Formen des Wärmeeintrags verwendet werden, d.h. die vorgenannten Einstrahlungen durch elektromagnetische Strahlung in Form von NIR-Strahlung, HF-Strahlung im Radiofrequenzbereich oder Mikrowellenstrahlung oder - in weniger bevorzugten Ausführungsformen - durch normale Konvektions- oder herkömmliche langwellige IR-Strahlung erfolgen. Der Wärmeeintrag kann dabei bei nachträglichem Wärmeeintrag diskontinuierlich, vorzugsweise aber kontinuierlich, erfolgen.

Bei allen Formen der thermischen Aktivierung sollte zur Erzielung optimaler Verklebungen die Oberflächentemperatur die Oberflächenfolie - insbesondere der dem Klebstoff zugewandten Grenzfläche - bei der Aktivierung den Bereich der Glasübergangstemperatur des Folienpolymers erreichen.

Als Schmelzklebstoffe für die Verklebung der Oberflächenfolien nach dem erfindungsgemäßen Verfahren eignen sich im Prinzip eine Vielzahl von Schmelzklebstoffen, bevorzugt sind die reaktiven Polyurethanschmelzklebstoffe wie sie beispielsweise unter dem Handelsnamen "Macroplast QR" oder "Purmelt" durch die Fa. Henkel KGaA vertrieben werden.

Für eine besonders dauerhafte Verklebung der (Meth)acrylat-basierenden Oberflächenfolien eignen sich insbesondere modifizierte reaktive Schmelzklebstoffe wie sie Gegenstand der noch unveröffentlichten DE 10149142.5 sind. Weiterhin eignen sich die acrylatmodifizierten Schmelzklebstoffe, die in der WO 99/28363 offenbart werden.

Bei den Schmelzklebstoffen gemäß WO 99/28363 handelt es sich um lösemittelfreie feuchtigkeitshärtende Polyurethan-Klebstoffe, die 95 bis 3 Gew.-% eines Umsetzungsprodukts aus einem ersten Polyisocyanat und einem Polymeren aus ethylenisch ungesättigten Monomeren mit einem Molekulargewicht unter 60.000 enthalten, wobei dieses Polymer aktive Wasserstoffgruppen aufweist, 5 bis 90 Gew.-% mindestens eines Polyurethan-Prepolymers mit freien Isocyanatgruppen hergestellt aus mindestens einem Polyol aus der Gruppe der Polyetherdiole, Polyethertriole, Polyesterpolyole, aromatischen Polyole und deren Gemischen sowie mindestens ein zweites Polyisocyanat, das mit einem ersten Polyisocyanat identisch oder von diesen verschieden sein kann, und 0 bis 40 Gew.-% mindestens eines Additivs aus der Gruppe der Katalysatoren, Klebrigmacher, Weichmacher, Füllstoffe, Pigmente, Stabilisatoren, Haftverbesser, Rheologieverbesserer und der Mischungen derselben, wobei die Summe dieser Bestandteile insgesamt 100 % ergibt, enthält.

Die nach dem erfindungsgemäßen Verfahren kaschierten Formkörper können als Türen, Fassadenelemente, Tür- und Fensterrahmen oder als Bauteile im Möbelbau Verwendung finden.

Nachfolgend soll die Erfindung an Hand einiger Prinzipversuche dargestellt werden, wobei die Auswahl der Beispiele keine Beschränkung des Umfanges des Erfindungsgegenstandes darstellen soll. Sie zeigen nur modellhaft die Wirkungsweise des erfindungsgemäßen Kaschierverfahrens insbesondere in Bezug auf seine einfache Durchführbarkeit und das Haftungsverhalten der Verklebung. Der Auftrag des Schmelzklebstoffes kann in konventioneller Weise im Sprühauftrag, mit Hilfe von Auftragswalzen, Rakeln und dergleichen erfolgen.

### Beispiele

### Kaschierversuche von PVC-Fensterprofilen

Die Verklebung einer mehrschichtigen Fensterdekorfolie auf der Basis einer pigmentierten. Acrylfolie mit transparenter, farbloser Acryl- / Polyvinylidenfluorid-Coextrusionsfolie als Oberflächenschicht (FAST3, Fa. Renolit) mit einem Standard PVC-Fensterprofil erfolgte mit dem reaktiven Schmelzklebstoff Purmelt QR 5401 der Fa. Henkel. Als Verklebungsseite der Dekorfolie wurde die Acrylatseite verwendet. Die Verklebung erfolgte auf einer Standard Profilummantelungsmaschine, vom Typ Friz, wobei das PVC-Profil mit einem lösungsmittelhaltigen Primer 6-B-23 der Fa. Henkel Dorus vorbehandelt wurde. Der Rakelspalt der Ummantelungsmaschine betrug 50 *µ*m, die Schmelzklebstofftemperatur betrug 130 °C, die Temperatur des PVC-Profils betrug 55 °C. Die Verklebung wurde auf ihre Schälfestigkeit nach 3 Std., 1 Tag und 7 Tagen Lagerung bei Normklima, sowie nach Alterung (7 Tage, 70 °C bei Wasserbelastung) geprüft. Die Ergebnisse sind in der nachfolgenden Tabelle zusammengefasst.

| Beispiel | Vorwärmun g der Folie | Temp. vor NIR Strahler °C | Temp. nach NIR Strahler °C | Temp. Spalt °C | Nachbehandlun g der Probe | Schälfest. nach 3h N/20mm | Schälfest. nach 24 h N/20mm | Schälfest. nach 7 d N/20mm |
|---|---|---|---|---|---|---|---|---|
| 1 (Vergleich ) | ohne | - | - | 70 | Ohne | 14 | 28 AF | 50 AF |
| 2 | ohne | - | - | 70 | 30min/60°C | 16 | 46 AF | 55 AF |
| 3 | ohne | - | - | 70 | 30min/80°C | 16 | 70 AF | 80 FR |
| 4 | mit NIR | 61 | 80 | 68 | Ohne | 25 | 59 AF | 78 FR |
| 5 | mit NIR | 74 | 83 | 72 | Ohne | 25 | 54 AF | 82 FR |
| 6 | mit NIR | 92 | 86 | 77 | Ohne | 25 | 61 AF | 84 FR |
| 7 | mit NIR | 46 | 58 | 55 | Ohne | 14 | 28 AF | 46 AF |

| | | | | | | | | |
|---|---|---|---|---|---|---|---|---|
| AF = Adhäsionsbruch zur Folie | | | | | | | | |
| FR = Folienriß | | | | | | | | |
| NIR Gerät Fa. MICOR | | | | | | | | |

Bei dem Beispiel 1 (Vergleich) wurde nach Stand der Technik verfahren, es wurde nur das Profil vorerwärmt. Bei den Beispielen 2 und 3 erfolgte eine thermische Nachbehandlung nach dem Verkleben bei 60°C bzw. 80°C. Bei den Beispielen 4. bis 6 wurde die Folie mit dem MICOR NIR-Gerät im Durchlauf vorgewärmt und inline mit Klebstoff beschichtet und dann ummantelt. Vorschub der Folie bei der inline Aktivierung und Klebstoffauftrag: 15 m/min, Abstand Folie zu NIR Strahler : 20 mm
Aus den Beispielen ist ersichtlich, daß sowohl die nachträgliche thermische Aktivierung als auch die inline Aktivierung mittels NIR gegenüber dem Vergleich eine deutliche Verbesserung der Schälfestigkeit bewirken. Versuch 7 zeigt, daß bei zu niedrigem Energieeintrag keine optimalen Ergebnisse erzielt werden.
Alle nach dem erfindungsgemäßen Verfahren verklebten Profile zeigten nach 7 Tagen Lagerung sowie insbesondere nach Alterung hohe Schälwerte bei überwiegendem (erwünschten) Folienriß.

## Patentansprüche

1. Verfahren zum Kaschieren von ein- oder mehrschichtigen Oberflächenfolien auf Basis von Polymeren mit einer Glasübergangstemperatur oberhalb von 50°C auf Formkörper aus Polyvinylchlorid (FVC), Polypropylen, Acrylnitril-Butadien-Styrol-Copolymeren (ABS), Holz oder Aluminium **gekennzeichnet durch** die folgenden wesentlichen Verfahrensschritte:
a) ggf. Vorbehandlung der Folienoberfläche mit einem Reiniger,
b) ggf. gefolgt von einer Coronabehandlung,
c) ggf. gefolgt vom Auftrag eines Primers auf die Folienoberfläche,
e) Auftrag eines reaktiven Polyurethan-Schmelzklebstoffes auf die Folienoberfläche,
f) ggf. Vorbehandlung der Formkörperoberflächen **durch** Primerauftrag oder Behandlung mit einem Reiniger, ggf. gefolgt von Ablüften der flüchtigen Bestandteile ggf. unter Zufuhr von Wärme, ggf. gefolgt von einer Coronabehandlung oder Beflammung der Formkörperoberfläche,
g) Fügen der Folie auf den Formkörper, ggf. unter Anpressen,
wobei eine thermische Aktivierung der Folie erfolgt, entweder als
d) thermische Aktivierung **durch** Erwärmung mit elektromagnetischer Strahlung, vor dem Auftragen des Schmelzklebstoffes und/oder als
h) thermische Aktivierung **durch** Konvektions- oder langwellige IR-Strahlung oder mit elektromagnetischer Strahlung nach dem Fügen von Folie und Formkörper.

2. Verfahren nach Anspruch 1 **dadurch gekennzeichnet, dass** eine Vorbehandlung als Schritt a) durchgeführt wird.

3. Verfahren nach Anspruch 1 oder 2 **dadurch gekennzeichnet dass** als elektromagnetische Strahlung IR-Strahlung, insbesondere die Strahlung des nahen Infrarots (NIR) im Wellenlängenbereich von 0,7 bis 1,5 µm verwendet wird.

4. Verfahren nach Anspruch 1 oder 2 **dadurch gekennzeichnet dass** als elektromagnetische Strahlung Radiofrequenzen im Bereich von 30 bis 100 MHz verwendet werden.

5. Verfahren nach Anspruch 1 oder 2 **dadurch gekennzeichnet dass** als elektromagnetische Strahlung Mikrowellen im Frequenzbereich von 400 MHz bis 3 GHz verwendet werden

6. Verfahren nach Anspruch 1 bis 5 **dadurch gekennzeichnet dass** nach dem Fügen der Folie auf den Formkörper eine thermische Aktivierung erfolgt.

7. Verfahren nach Anspruch 1 bis 6 **dadurch gekennzeichnet dass** als Schmelzklebstoff ein reaktiver Polyurethan-Klebstoff verwendet wird, der umfasst
a) 95 bis 3 Gew.-% eines Umsetzungsprodukts aus einem ersten Polyisocyanat und einem Polymeren aus ethylenisch ungesättigten Monomeren mit einem Molekulargewicht unter 60.000, wobei dieses Polymer aktive Wasserstoffgruppen aufweist;
b) 5 bis 90 Gew.-% mindestens eines Polyurethan-Präpolymers mit freien Isocyanatgruppen, hergestellt aus mindestens einem Polyol aus der Gruppe der Polyetherdiole, Polyethertriole, Polyesterpolyole, aromatischen Polyolen und deren Gemische sowie mindestens ein zweites Polyisocyanat, das mit dem ersten Polyisocyanat identisch oder von diesem verschieden sein kann; und
c) 0 bis 40 Gew.-% mindestens eines Additivs aus der Gruppe der Katalysatoren, Klebrigmacher, Weichmacher, Füller, Pigmente, Stabilisatoren, Haftverbesserer, Rheologieverbesserer und Mischungen derselben, und zwar dergestalt, dass die Summe aus a), b) und c) insgesamt 100 Gew.-% ergibt.

8. Verwendung von kaschierten Formkörpern herstellbar nach Anspruch 1 bis 6 für Türen, Fassadenelemente, Tür- und Fensterrahmen oder im Möbelbau.

## Claims

1. A process for the lamination of single- or multilayer surface films based on polymers with a glass transition temperature above 50°C to moldings composed of polyvinyl chloride (PVC), of polypropylene, of acrylonitrile-butadiene-styrene copolymers (ABS), or wood, or aluminum, **characterized by** the following essential steps of a process:
a) where appropriate pretreatment of the film surface with a cleaning agent,
b) where appropriate followed by a corona treatment,
c) where appropriate followed by application of a primer to the film surface,
e) application of a reactive polyurethane hot-melt adhesive to the film surface,
f) where appropriate pretreatment of the molding surfaces via primer application or treatment with a cleaning agent, where appropriate followed by air-drying to remove the volatile constituents, where appropriate with supply of heat, where appropriate followed by a corona treatment or flame treatment of the molding surface,
g) attaching the film to the molding, where appropriate pressing one material onto the other,
whereby a thermal activation takes place either as d) thermal activation of the film by heating with electromagnetic radiation, and/or as
h) thermal activation by convection radiation, long wave IR-radiation or with electromagnetic radiation after attaching the film to the molding.

2. The process as claimed in claim 1, **characterized in that** step a) is performed.

3. The process as claimed in claim 1 or 2, **characterized in that** the electromagnetic radiation used comprises IR radiation, in particular near-infrared (NIR) radiation in the wavelength range from 0.7 to 1.5 µm.

4. The process as claimed in claim 1 or 2, **characterized in that** the electromagnetic radiation used comprises radio frequencies in the range from 30 to 100 MHz.

5. The process as claimed in claim 1 or 2, **characterized in that** the electromagnetic radiation used comprises microwaves in the frequency range from 400 MHz to 3 GHz.

6. The process as claimed in any of claims 1 to 5, **characterized in that** after the attaching of the film to the molding a thermal activation takes place.

7. The process as claimed in any of claims 1 to 6, **characterized in that** a reactive hot-melt adhesive is used comprising
a) 95 to 3 % by weight of a reaction product of a first polyisocyanate and a polymer comprising ethylenically unsaturated monomers, with a molecular weight below 60000, wherein said polymer has active hydrogen groups;
b) 5 to 95 % by weight of at least one polyurethane prepolymer with free isocyanate groups, prepared from at least one polyol selected from the group consisting of polyether diols, polyether triols, polyester polyols, aromatic polyols and mixtures thereof, and at least one second polyisocyanate which may be the same or different from the first polyisocyanate; and
c) 0 to 40 % by weight of at least one additive selected from the group consisting of catalysts, tackifiers, plasticizers, fillers, pigments, stabilizers, adhesion promoters, rheology improvers and mixtures thereof, wherein the sum of a),b) and c) is 100 % by weight.

8. The use of laminated moldings capable of production as claimed in any of claims 1 to 6 for doors, facade elements, door frames and window frames, or in the construction of furniture.

## Revendications

1. Procédé pour contrecoller des feuilles de surface monocouche ou multicouche à base de polymères ayant une température de transition vitreuse supérieure à 50°C sur des corps moulés constitués de poly(chlorure de vinyle) (PVC), de polypropylène, de copolymères acrylonitrile/butadiène/styrène (ABS), de bois ou d'aluminium, **caractérisé par** les étapes de procédé essentielles suivantes :
a) éventuellement un prétraitement de la surface des feuilles par un agent nettoyant,
b) éventuellement suivi par un traitement par effet corona,
c) éventuellement suivi de l'application d'un apprêt sur la surface de feuille,
e) l'application d'une colle fusible réactive à base de polyuréthane sur la surface de feuille,
f) éventuellement un prétraitement des surfaces de corps moulé par application d'apprêt ou traitement par un agent nettoyant, éventuellement suivi par évaporation des composants volatils, éventuellement avec apport de chaleur, éventuellement suivi par un traitement par effet corona ou flambage de la surface de corps moulé,
g) l'assemblage de la feuille sur le corps moulé, éventuellement en la pressant contre celui-ci,
où il s'ensuit une activation thermique de la feuille, sous forme
d) d'activation thermique par réchauffement avec un rayonnement électromagnétique, avant l'application de la colle fusible et/ou sous forme
h) d'activation thermique au moyen d'un rayonnement par convexion ou IR de grande longueur d'onde ou avec un rayonnement électromagnétique après assemblage de la feuille et du corps moulé.

2. Procédé selon la revendication 1 **caractérisé en ce qu'**un prétraitement est réalisé en tant qu'étape a).

3. Procédé selon la revendication 1 ou 2, **caractérisé en ce qu'**un rayonnement IR, en particulier le rayonnement du proche infrarouge (NIR) dans la plage de longueurs d'onde de 0,7 à 1,5 µm, est employé en tant que rayonnement électromagnétique.

4. Procédé selon la revendication 1 ou 2, **caractérisé en ce que** des radiofréquences dans la plage de 30 à 100 MHz sont employées en tant que rayonnement électromagnétique.

5. Procédé selon la revendication 1 ou 2, **caractérisé en ce que** des micro-ondes dans la plage de fréquences de 400 MHz à 3 GHz sont employées en tant que rayonnement électromagnétique.

6. Procédé selon les revendications 1 à 5, **caractérisé en ce qu'**une activation thermique a lieu après assemblage de la feuille sur le corps moulé.

7. Procédé selon les revendications 1 à 6, **caractérisé en ce qu'**une colle réactive à base de polyuréthane est employée en tant que colle fusible, qui comprend
a) de 95 à 3% en poids d'un produit de réaction d'un premier polyisocyanate et d'un polymère constitué de monomères à insaturation éthylénique ayant une masse moléculaire inférieure à 60 000, ce polymère présentant des groupes à hydrogène actif;
b) de 5 à 90% en poids d'au moins un prépolymère de polyuréthane ayant des groupes isocyanates libres, préparés à partir d'au moins un polyol issu du groupe des polyétherdiols, polyéthertriols, polyesterpolyols, polyols aromatiques et leurs mélanges, ainsi qu'au moins un deuxième polyisocyanate, qui peut être identique au premier polyisocyanate ou différent de celui-ci; et
c) de 0 à 40% en poids d'au moins un additif issu du groupe des catalyseurs, des agents collants, des plastifiants, des charges, des pigments, des stabilisants, des agents améliorant l'adhérence, des agents améliorant les propriétés rhéologiques, et des mélanges de ceux-ci, et ce, de sorte que la somme de a), b) et c) fasse au total 100% en poids.

8. Utilisation de corps moulés contrecollés pouvant être préparés selon les revendications 1 à 6, pour des portes, des éléments de façade, des cadres de porte et de fenêtre ou dans la construction de meubles.
